# EUROPEAN PATENT SPECIFICATION

(11) **EP 4 470 981 B1**
(45) Date of publication and mention of the grant of the patent: **18.02.2026**
(21) Application number: 23923206.9
(22) Date of filing: 26.07.2023
(51) Int. Cl.: C03C 13/00, C03C 3/085, C03C 3/095, C03B 37/022, C03B 37/083

(54) **HIGH-MAGNESIUM HIGH-SPECIFIC-MODULUS GLASS FIBER COMPOSITION AND GLASS FIBER**
GLASFASERZUSAMMENSETZUNG MIT HOHEM MAGNESIUMGEHALT UND HOHEM SPEZIFISCHEM MODUL SOWIE GLASFASER
COMPOSITION DE FIBRE DE VERRE À MODULE SPÉCIFIQUE ÉLEVÉ, À HAUTE TENEUR EN MAGNÉSIUM, ET FIBRE DE VERRE

(30) Priority: 24.02.2023 CN 202310160228
(43) Date of publication of application: 04.12.2024
(73) Proprietor: Taishan Fiberglass Inc., Taian, Shandong 271000 (CN)
(72) Inventor: TANG, Zhiyao, Taian, Shandong 271000 (CN); ZHANG, Degang, Taian, Shandong 271000 (CN); LI, Yongyan, Taian, Shandong 271000 (CN); WANG, Jiafang, Taian, Shandong 271000 (CN); DU, Fengling, Taian, Shandong 271000 (CN); XU, Dongzhi, Taian, Shandong 271000 (CN); NING, Shangpeng, Taian, Shandong 271000 (CN); LIU, Honggang, Taian, Shandong 271000 (CN); LIU, Lifeng, Taian, Shandong 271000 (CN); LI, Guodong, Taian, Shandong 271000 (CN); WU, Qinxia, Taian, Shandong 271000 (CN); LIU, Xiaobin, Taian, Shandong 271000 (CN); WANG, Dongdong, Taian, Shandong 271000 (CN)
(74) Representative: Studio Torta S.p.A.
(86) International application number: PCT/CN2023/109331
(87) International publication number: WO 2024/174468

(56) References cited:
- EP-A2- 3 287 423
- WO-A2-2016/165506
- CN-A- 105 731 814
- CN-A- 106 007 369
- CN-A- 110 809 565
- CN-A- 115 432 932
- CN-A- 115 432 932
- CN-A- 116 282 934
- US-A1- 2020 165 158
- US-A1- 2023 035 048

## Description

### Technical Field

The present disclosure belongs to the technical field of glass fibers and specifically relates to high-magnesium glass fiber composition with high specific modulus and glass fiber.

### Background

In recent years, with continuous improvement of wind power generation technologies, wind power generation is developing in the direction of large-megawatt and large-size blades. Therefore, higher requirements are put forward for mechanical properties of glass fibers for wind blades: High modulus, low density, fatigue resistance, and corrosion resistance. Each glass fiber production enterprise also complies with market demands to update iterative high modulus glass formulations.

Specific modulus is elastic modulus per unit density. Large-size wind power blades made from glass fibers with high specific modulus can effectively reduce the blade weight, which can not only increase the power generation efficiency, but also be applicable to areas with low wind speeds, and as a development direction of the glass fiber industry, have become a research hotspot of the glass fiber industry in recent years.

EP3287423 discloses high performance glass fiber compositions.

A Chinese patent CN111217531A discloses a high-performance fiber glass composition with improved specific modulus, which includes 58.0-68.0% of SiO₂, 18.0-23.0% of Al₂O₃, 1.0-9.0% of CaO, 9.0-14.0% of MgO, as well as 0.0-4.0% of Li₂O, 0.0-4.0% of TiO₂, 0-10.0% of Y₂O₃, 0-10.0% of La₂O₃, 0-2.5% of Ce₂O₃, and 0-4.0% of Sc₂O₃. A glass fiber in the patent has relatively low elastic modulus, and meanwhile, due to the addition of higher contents of rare earth heavy elements, has higher glass density, such that weight reduction of large blades is difficult to realize.

Most of existing high-modulus formulation systems are mainly based on a SiO₂-Al₂O₃-MgO ternary system, and the modulus is improved by increasing the content of Al₂O₃ (18.0-25%) and the content of MgO (8.0-14.0%). The formulation system has important disadvantages that glass with a strong crystallization ability and a high crystallization rate, and a devitrified crystal is mainly "cordierite". The cordierite adopts a hexagonal ring composed of a silica tetrahedron as a basic construction unit and adopts Al and Mg to connect rings, which belongs to dipyramidal crystals and has an extremely stable crystal structure. The crystal is difficult to melt once being formed. In a glass fiber production process, the cordierite crystal is a great potential hazard in production, the generation of which is difficult to avoid and highly unfavorable to large-scale tank furnace production of glass fibers.

### SUMMARY

The purpose of the present disclosure is to provide a high-magnesium glass fiber composition with high specific modulus. The glass fiber composition has low density, high elastic modulus and excellent fatigue properties of composite materials. By adjusting contents of glass components, a crystallization region of cordierite is avoided, and the cordierite is changed into enstatite easy to melt. Meanwhile, glass crystallization is effectively inhibited by adding B₂O₃ and Y₂O₃. The present disclosure also provides a glass fiber made from the high-magnesium glass fiber composition with high specific modulus.

The high-magnesium glass fiber composition with high specific modulus of the present disclosure includes the following contents of components in percentage by mass:
58.5-63.0% of SiO₂, 15.0-20.0% of Al₂O₃, 0.3-2.5% of CaO, 16.0-19.5% of MgO, 0.2-0.6% of Fe₂O₃, 1.0-3.5% of Y₂O₃ and B₂O₃, 0.1-1.0% of B₂O₃, 0.3-0.8% of K₂O and Na₂O, and other unavoidable impurities.

Further preferably:
The content of Y₂O₃ and B₂O₃ in percentage by mass satisfies that the content of Y₂O₃ and B₂O₃ is 1.0-3.2% and a B₂O₃/Y₂O₃ ratio is 0.2-0.5.

The contents of Al₂O₃ and MgO in percentage by mass satisfy that a MgO/Al₂O₃ ratio is 0.8-1.2; and preferably, the MgO/Al₂O₃ ratio is 0.85-1.15.

The high-magnesium glass fiber composition with high specific modulus has a density of equal to or less than 2.61 g/cm³.

The high-magnesium glass fiber composition with high specific modulus of the present disclosure includes the following contents of components in percentage by mass: 59.0-62.5% of the SiO₂, 16.5-19.0% of the Al₂O₃, 0.5-2.5% of the CaO, 16.0-19.0% of the MgO, 0.2-0.5% of the Fe₂O₃, 1.0-3.0% of the Y₂O₃ and the B₂O₃, 0.2-0.9% of the B₂O₃, 0.3-0.6% of the K₂O and the Na₂O, and other unavoidable impurities.

The glass fiber made from the high-magnesium glass fiber composition with high specific modulus of the present disclosure has a specific modulus of equal to or greater than 3.67*10⁶m; the glass fiber has an elastic modulus of equal to or greater than 94.0 GPa; the glass fiber has a forming temperature of 1,290 °C-1,320 °C; and the glass fiber has a liquidus temperature of 1,260 °C-1,280 °C.

The high-magnesium glass fiber composition with high specific modulus of the present disclosure is made from the following raw materials: Quartz powder, calcined kaolin, quicklime, talc powder, yttrium oxide, magnesium oxide, and colemanite. The quartz powder has a particle size of 40µm-50 µm, the calcined kaolin has a particle size of 50µm-100 µm, the quicklime has a particle size of 100µm-200 µm, the talc powder has a particle size of 50µm-100 µm, the yttrium oxide has a particle size of 30µm-75 µm, the magnesium oxide has a particle size of 50µm-80 µm, and the colemanite has a particle size of 40µm-75 µm.

The SiO₂ is a main oxide in forming a glass skeleton structure, and a three-dimensional continuous skeleton constituted by a [SiO₄] tetrahedron in glass can improve the strength and chemical stability of the glass. In order to adjust and stabilize other components and achieve optimum fiber forming property, elastic modulus and density of the glass fiber, the content of SiO₂ in the present disclosure is limited in a range of 58.5-63.0%, preferably 59.0-62.5%.

The MgO is a special alkaline earth metal element. In a glass network structure, Mg²⁺ has a variety of coordinations, including polyhedrons of different coordinations such as [MgO₄], [MgO₅], [MgO₆], etc. The [MgOₙ] polyhedrons are usually located outside a network skeleton to play the role of adjustment so as to achieve a network breaking effect according to differences in glass composition or to provide free oxygen so as to achieve an electrovalence equilibrium effect around [AlO₄]. In rare instances, the four-coordinated [MgO₄] form enters the network structure. After the [MgO₄] appears, the glass network structure is more complete and more compact, such that the glass has lower density and higher elastic modulus. In the present disclosure, the quantity of [MgO₄] is increased to increase the quantity of the glass network skeleton mainly by increasing the content of MgO and adjusting the contents and use ratios of SiO₂, CaO, Al₂O₃ and R₂O. Meanwhile, conversion of the four-coordinated [AlO₄] to the five-coordinated [AlO₅] and the six-coordinated [AlO₆] is inhibited, and the glass network structure is strengthened to achieve the purpose of improving the elastic modulus. Meanwhile, the formation of crystallization of cordierite is inhibited, which is also one of main innovations of the present disclosure. In the glass system of the present disclosure, the content of MgO is limited and controlled to 16.0-19.5%, preferably 16.0-19.0%.

The Al₂O₃ has many complex coordinations in glass, including transformations of a variety of coordinations such as [AlO₆], [AlO₅], [AlO₄], etc. In the absence of free oxygen, Al³⁺ is located in network gaps in an [AlO₆] octahedron. In the presence of free oxygen, the Al³⁺ forms [AlO₄] to enter the glass skeleton. At this time, the Al₂O₃ achieves a network supplementing effect, which can improve the elastic modulus and chemical stability of glass. When too much free oxygen has an excess in addition to meeting ion capture of an intermediate, the network skeleton structure will be destroyed, thus reducing the bonding degree of the glass skeleton, leading to decrease of the elastic modulus and reducing the stability. In the present disclosure, according to the contents and ratios of SiO₂, MgO and other elements, the quantity of free oxygen is ingeniously controlled, and the quantity of [AlO₄] is increased as much as possible to improve the elastic modulus of glass. However, the Al₂O₃ at a too high content will increase the ability of glass to devitrify the cordierite crystal, which is unfavorable to large-scale tank furnace production. In the glass system of the present disclosure, the content of Al₂O₃ is limited in a range of 15.0-20.0%, preferably 16.5-19.0%.

SiO₂-Al₂O₃-MgO, as a main system of the present disclosure, includes main elements for improving the elastic modulus and reducing the density. For a glass formulation with high elastic modulus, a network is required to have high bond strength between ions, and the network is also required to have enough deformation ability to adapt to deformation caused by an external force. The SiO₂-Al₂O₃-MgO system is a good choice, and most of systems with high strength and high elastic modulus adopt the system. The formulation system has important disadvantages that glass has a strong crystallization ability and a high crystallization rate, and a devitrified crystal is mainly "cordierite". The cordierite has a decomposition temperature of 1,540 °C, the cordierite has an extremely high growth speed once a crystal nucleus appears, the cordierite has orthorhombic dipyramidal crystal structure, and the structure is compact. During tank furnace production, the crystal is difficult to melt and has a great potential hazard once being formed, which is also one of problems in a tank furnace process using a formulation with high elastic modulus.

In the formulation with high elastic modulus, the cordierite as a main crystal phase is inhibited by generally increasing the CaO and adding other transition metal oxides to produce a variety of crystal phases and make the crystal phases to undergo competition. However, the technical solution will increase the density of the glass fiber composition while improving the elastic modulus. In the present disclosure, by decreasing the content of Al₂O₃, increasing the content of MgO and adjusting the use amount of SiO₂, the content of SiO₂ is equal to or greater than 58.5%, and the content of MgO is equal to or greater than 16.0%. By controlling the use ratio of MgO and Al₂O₃, the MgO/Al₂O₃ ratio is 0.8-1.2. The crystallization type of glass is adjusted to enstatite while ensuring high elastic modulus and low density, and the crystal has a low growth speed, poor compactness, a low melting temperature and a low risk of crystallization during tank furnace production.

The CaO is a network modifying oxide, which can reduce the high-temperature viscosity of glass. The CaO has no obvious contributions to the elastic modulus and will significantly increase the density of glass. Meanwhile, because the present disclosure has a high content of MgO, the quantity of free oxygen in the glass is high. Therefore, the CaO capable of providing free oxygen needs to be controlled, and a small amount of CaO is introduced to adjust material properties of the glass, which is favorable to forming of the glass fiber. The content of CaO in the present disclosure is limited in a range of 0.3-2.5%, preferably 0.5-2.5%.

In the present disclosure, the B₂O₃ is also added, which is a most ingenious point of the present disclosure. The B₂O₃ has the following three aspects of advantages. (1) In silicate glass, B³⁺ with a coordination number of 3 forms a [BO₃] boron-oxygen triangle with a layered structure, which is a network modifier and has an unstable structure. However, the B³⁺ can form a [BO₄] tetrahedron once obtaining free oxygen. The [BO₄] tetrahedron can form a network structure. The purpose of adding the B₂O₃ in the present disclosure is to neutralize excessive free oxygen provided by the MgO in the glass structure to form [BO₄] so as to form the glass network structure together with [SiO₄], [AlO₄] and [MgO₄], thereby improving the elastic modulus and reducing the density. (2) The added B₂O₃ can effectively improve crystallization and has a very good synergistic effect especially with the Y₂O₃, which can not only reduce the crystallization temperature, but also reduce the crystallization rate. (3) The B₂O₃ has a fluxing effect, which effectively reduces the melting temperature of a batch material. In the present disclosure, the content of SiO₂ is relatively high, and the quartz powder is a mineral most difficult to melt. Thus, the problem can be effectively solved by adding the B₂O₃. Certainly, the content of B₂O₃ needs to be controlled in a suitable range, because B³⁺ at a too high content will destroy [SiO₄] to achieve an opposite effect after forming a boron-oxygen triangle. Therefore, the content of B₂O₃ in the present disclosure is limited in a range of 0.1-1.0%, preferably 0.2-0.9%.

The Y₂O₃ is a rare earth oxide with high coordination and high field strength. In the present disclosure, a small amount of Y₂O₃ is added, which can effectively inhibit crystallization together with the B₂O₃, reduce the liquidus temperature of glass without reducing the fiber forming temperature of glass, increase ΔT, reduce the risk of crystallization in a drawing operation process, and is very favorable especially in tank furnace production. The Y₂O₃ is a heavy element, which will affect the density of the glass fiber composition to deviate from the low density of the present disclosure when being added at a too high content. Therefore, in order to balance the glass fiber forming temperature, the liquidus temperature and the density of the glass fiber composition, the content of Y₂O₃ and B₂O₃ in the present disclosure is limited in a range of 1.0-3.5%, preferably 1.0-3.0%.

In the present disclosure, simultaneous addition of the Y₂O₃ and the B₂O₃ will increase the crystallization activation energy of the glass system and increase the crystallization potential barrier. When the glass system is converted to a crystal state, more energy, namely activation energy, is required to overcome the rearrangement potential barrier of a structural unit. When the potential barrier is higher, the crystallization activation energy required is greater, and the glass has a smaller crystallization tendency. During tank furnace production, crystallization is difficult to occur in a cooling process of a channel, which is favorable to production operation. The use ratio of B₂O₃ and Y₂O₃ is reasonably controlled in the present disclosure, and an optimal effect is achieved when the B₂O₃/Y₂O₃ ratio is 0.2-0.5.

The Na₂O and the K₂O can reduce the electrical resistivity of glass and improve the utilization rate of an electrical fluxing system in tank furnace production, which are favorable to improving the melting quality of molten glass. However, introduction at a too high content is not conducive to improvement of the elastic modulus of the glass composition. In the present disclosure, the content of Na₂O and K₂O is limited in a range of 0.3-0.8%, preferably 0.3-0.6%.

The present disclosure is free of Li₂O, which is one of technical points different from other formulations with high elastic modulus. The Li₂O can effectively achieve fluxing, and due to a small ion radius, has a strong accumulation ability and can accumulate intermediate ions of the network to achieve the effect of improving stability. However, the quantity of tetrahedrons such as [BO₄], [SiO₄], [AlO₄] and [MgO₄] has already been increased significantly by technical means in the present disclosure, and the elastic modulus is improved more effectively by increasing the network structure. The Li₂O has a too high cost and has no obvious significance for the present disclosure.

The high-magnesium glass fiber composition with high specific modulus of the present disclosure is made from the following raw materials: Quartz powder, calcined kaolin, quicklime, talc powder, yttrium oxide, magnesium oxide, and colemanite.

In the present disclosure, in order to reduce the production cost, the calcined kaolin raw material is selected to introduce the Al₂O₃ in the glass components. A primary value is that the cost of tons of glass can be greatly reduced by replacing industrial alumina to introduce the Al₂O₃. Second, a main purpose of the calcined kaolin is that the COD and gas ratio of the batch material can be effectively adjusted. Third, the calcined kaolin mainly based on a mullite phase, compared with industrial alumina, has a lower melting point, which is very beneficial to reducing energy consumption of the batch material during melting and reducing the production cost of tons of glass.

The glass system of the present disclosure has a high content of SiO₂ and a low content of CaO. In the batch material, a calcium raw material is decreased, and the quartz powder as a silicon raw material is increased. The quartz powder is composed of a relatively pure quartz phase and has a theoretical melting temperature up to 1,750°C. The melting temperature of the batch material is high, which is not conducive to melting in a tank furnace. In the present disclosure, the talc powder is introduced to replace a part of the quartz powder, which can reduce the use amount of the quartz powder. The talc powder, as a silicate raw material, is easily eutectoid at low temperature in the batch material, which can further reduce the melting temperature of the batch material.

In the present disclosure, the particle size of the talc powder raw material is controlled in a range of 50µm-100 µm. When the particle size is too fine, the thickness of a foam layer in the tank furnace will be affected, thus affecting the absorption of thermal radiation and increasing energy consumption. When the particle size is too coarse, poor melting of molten glass will be caused. Particle size distributions of other raw materials are preferably as follows. The calcined kaolin has a particle size of 50µm-100 µm, the quartz powder has a particle size of 40µm-50 µm, the quicklime has a particle size of 100µm-200 µm, the yttrium oxide has a particle size of 30µm-75 µm, the magnesium oxide has a particle size of 50µm-80 µm, and the colemanite has a particle size of 40µm-75 µm. In the present disclosure, by reasonably selecting the raw materials and controlling the particle size, the melting quality of the molten glass of the glass system is ensured, meanwhile, the melting temperature and energy consumption of the tank furnace are reduced, and erosion caused by refractory materials in the tank furnace to the molten glass at high temperature is reduced.

The present disclosure has the following beneficial effects.

In the present disclosure, by greatly increasing the content of MgO, simultaneously increasing the content of SiO₂, decreasing the contents of Al₂O₃ and CaO and adjusting a use ratio of MgO/Al₂O₃ in the SiO₂-Al₂O₃-MgO ternary system, the glass crystallization type is changed from cordierite to enstatite. In the present disclosure, [SiO₄], [AlO₄], [MgO₄] and [BO₄] together form the glass skeleton structure. By using the B₂O₃ and other elements capable of being transformed into a network structure and adjusting the content of free oxygen and the ratios of various components, the glass network quantity is increased, the elastic modulus is improved, and the density is reduced. In addition, by ingeniously controlling the added content of Y₂O₃ and B₂O₃ and controlling the B₂O₃/Y₂O₃ ratio in a range of 0.2-0.5 in the present disclosure, the crystallization activation energy is adjusted, and the risk of crystallization in a production process is reduced. The high-magnesium glass fiber composition with high specific modulus of the present disclosure has a density of equal to or less than 2.610 g/cm³. The glass fiber made from the high-magnesium glass fiber composition with high specific modulus has an elastic modulus of equal to or greater than 94.0 GPa and a specific modulus of equal to or greater than 3.67*10⁶m, which has a higher elastic modulus, a lower density, a weaker crystallization ability and a lower cost and can be used for large wind power blades to significantly reduce the mass of glass fiber composite materials.

In the present disclosure, the glass fiber made from the high-magnesium glass fiber composition with high specific modulus has a forming temperature no higher than 1,320°C and an upper limit of a crystallization temperature no higher than 1,280 °C. By adjusting the crystallization type, the crystallization rate and the crystallization potential barrier, the glass fiber is not prone to crystallization in a production process so as to meet requirements of a drawing process. By reasonably selecting the raw materials and controlling the particle size, the cost is further reduced, and more convenience is provided for using the glass system formulation in large-scale tank furnace production.

### Brief Description of the Drawings

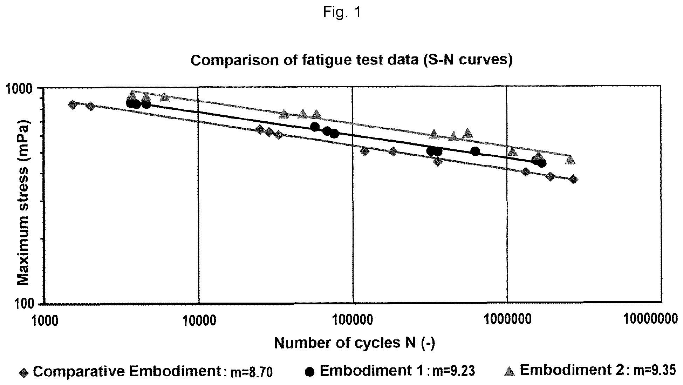

Fig. 1 shows S-N curves of pultruded plates made from glass fibers in Embodiment 1, Embodiment 2 and Comparative Embodiment 3 of the present disclosure in a fatigue property test.

### Detailed Description of the Embodiments

The present disclosure is further described below in conjunction with embodiments.

A method for manufacturing a high-magnesium glass fiber with high specific modulus of the present disclosure includes the following steps:
(1) Calculating the mass of various raw materials required according to contents of various components, weighing the various raw materials, evenly mixing the raw materials by a pneumatic force, conveying the raw materials to a feed bin at a furnace head to obtain a mixed batch and then putting the mixed batch into a large tank furnace by a feeding material at a constant speed;
(2) Subjecting the mixed mixed batch to melting at 1,450 °C-1,550 °C in the tank furnace, followed by clarification to obtain homogeneous glass melt;
(3) Subjecting the molten glass to drawing at 1,290 °C-1,320 °C through a discharge spout on a platinum-rhodium discharge plate to form a glass fiber; and
(4) Coating the glass fiber with an infiltrating agent through an oiling device, and pulling the glass fiber to a drawing machine for high-speed drawing to form a raw filament product.

Ingredients and specifications of the various raw materials used are shown in Table 1.

**Table 1 Ingredients and specifications of various raw materials used**

| Raw material name | Oxide name and content | Particle size |
|---|---|---|
| Quartz powder | SiO₂≥99.0% | 40-50 µm |
| Calcined kaolin | Al₂O₃≥40.0%, SiO₂≥53.0% | 50µm-100 µm |
| Quicklime | CaO≥93.0% | 100µm-200 µm |
| Talc powder | SiO₂≥60.0%, MgO≥30.0% | 50µm-100 µm |
| Magnesium oxide | MgO≥93% | 50µm-80 µm |
| Yttrium oxide | Y₂O₃≥97.0% | 30µm-75 µm |
| Colemanite | B₂O₃≥40.0%, CaO≥26.0%, SiO₂≤7.0% | 40µm-75 µm |

The raw materials with different particle size distributions are adopted in the present disclosure. On the one hand, the mixing uniformity of the raw materials is ensured. On the other hand, the introduction of ultrafine powder is reduced, which is conducive to the discharge of bubbles in the molten glass. The present disclosure is applicable to a large tank furnace and is conducive to improving the production efficiency.

Method for manufacturing a pultruded plate: Glass fiber yarns are neatly and evenly arranged by a yarn guide arrangement device, evenly impregnated in a resin tank, preliminarily shaped by a preforming device to extrude excess resin, then sent into a mold for heating and curing, and pulled out of the mold by a pulling device to obtain a composite plate.

Fatigue life S-N curve: When a glass fiber reinforced composite material is subjected to a fatigue load, partial work will form defects in the material. With increase of the number of loading, the defects are accumulated continuously. When the number of loading reaches a life value of the material, cracks will expand to a critical point, causing damage to the material. A load-fatigue life curve (S-N curve) of a material is a monotone decreasing curve, and that is to say, the fatigue life of the material is decreased monotonically with increase of an externally applied load.

In verifying comprehensive performance of glass fibers in embodiments and comparative embodiments, the following several parameters are selected:
(1) Forming temperature, namely a temperature of glass with a viscosity of 1,000 Poise, which can be used for characterizing the forming temperature for fiber formation, where the high-temperature viscosity of the glass is obtained by using a high-temperature viscometer;
(2) Liquidus temperature, namely a critical temperature at which the glass begins to devitrify, which is generally an upper limit of a crystallization temperature of the glass, where the upper limit of the crystallization temperature of the glass is obtained by using a crystallization furnace;
(3) ΔT, which is a difference value between the forming temperature and the liquidus temperature;
(4) Crystallization type, where a polarizing microscope or an X-ray diffractometer is used;
(5) Glass density, which is tested by a standard test method for measuring the glass density according to an ASTM C693 buoyancy method;
(6) Elastic modulus, which is tested according to an ASTM D2343 standard;
(7) Specific modulus, which is a ratio of the elastic modulus of a material to the density (specific modulus=elastic modulus/(density*9.8)) at a unit of 10⁶ m;
(8) Crystallization activation energy, which is calculated and obtained by reading temperature parameters on a DSC curve at a heating rate of 5 °C/min, 10 °C/min, 15 °C/min, or 20 °C/min according to a non-isothermal DSC method; and
(9) Fatigue property, where a dynamic fatigue property test of a continuous fiber reinforced plastic pultruded plate is carried out using an Instron8802-250/100KN fatigue testing machine with reference to an ISO13003 (2003) standard test.

### Embodiments 1-8

Composition of high-magnesium glass fiber compositions with high specific modulus and property data of glass fibers in Embodiments 1-8 are shown in Table 2.

### Comparative Embodiments 1-8

Composition of glass fiber compositions and property data of glass fibers in Comparative Embodiments 1-8 are shown in Table 3.

**Table 2 Data table for Embodiments 1-8**

| Embodiment | | Embodiment 1 | Embodiment 2 | Embodiment 3 | Embodiment 4 | Embodiment 5 | Embodiment 6 | Embodiment 7 | Embodiment 8 |
|---|---|---|---|---|---|---|---|---|---|
| Component | SiO₂ (%) | 60.6 | 62.6 | 62.2 | 61.2 | 59.9 | 61.1 | 59.5 | 60.6 |
| | Al₂O₃ (%) | 17.1 | 16.8 | 16.5 | 18.2 | 19.5 | 16 | 18.6 | 17.1 |
| | CaO (%) | 1.5 | 2.5 | 1.1 | 0.5 | 0.7 | 0.8 | 1.4 | 1.5 |
| | MgO (%) | 17.7 | 16.3 | 17.3 | 16.7 | 18 | 18.4 | 19 | 17.7 |
| | K₂O+Na₂O (%) | 0.7 | 0.3 | 0.7 | 0.8 | 0.4 | 0.5 | 0.3 | 0.7 |
| | Fe₂O₃ (%) | 0.2 | 0.4 | 0.6 | 0.5 | 0.3 | 0.2 | 0.2 | 0.2 |
| | B₂O₃ (%) | 0.5 | 0.3 | 0.5 | 0.6 | 0.3 | 0.8 | 0.2 | 0.5 |
| | Y₂O₃ (%) | 1.7 | 0.8 | 1.1 | 1.5 | 0.9 | 2.2 | 0.8 | 1.7 |
| Ratio | B₂O₃/Y₂O₃ | 0.29 | 0.38 | 0.45 | 0.40 | 0.33 | 0.36 | 0.25 | 0.29 |
| | MgO/Al₂O₃ | 1.04 | 0.97 | 1.05 | 0.92 | 0.92 | 1.15 | 1.02 | 1.04 |
| Prop erties | Forming temperature (°C) | 1320 | 1315 | 1316 | 1315 | 1311 | 1313 | 1308 | 1320 |
| | Liquidus temperature (°C) | 1265 | 1263 | 1273 | 1275 | 1270 | 1276 | 1273 | 1265 |
| | Crystallization activation energy (kJ/mol) | 436 | 450 | 442 | 456 | 440 | 467 | 456 | 436 |
| | Crystallization type | Enstat ite | Enstat ite | Enstat ite | Enstat ite | Enstat ite | Enstat ite | Ensta tite | Enst atite |
| | ΔT (°C) | 55 | 52 | 43 | 40 | 41 | 37 | 35 | 55 |
| | Density (g/cm³) | 2.61 | 2.605 | 2.598 | 2.597 | 2.599 | 2.591 | 2.596 | 2.61 |
| | Elastic modulus (GPa) | 95 | 96 | 95.8 | 98.5 | 97.1 | 95.4 | 96.5 | 95 |
| | Specific modulus (*10⁶ m) | 3.71 | 3.76 | 3.76 | 3.87 | 3.81 | 3.76 | 3.79 | 3.71 |

**Table 3 Data table for Comparative Embodiments 1-8**

| Comparative | | Comp | Comp | Comp | Comp | Comp | Comp | Com | Comp |
|---|---|---|---|---|---|---|---|---|---|
| Embodiment | | arativ e Embo dimen t 1 | arativ e Embo dimen t 2 | arativ e Embo dimen t 3 | arativ e Embo dimen t 4 | arativ e Embo dimen t 5 | arativ e Embo dimen t 6 | parati ve Embo dime nt 7 | arative Embo diment 8 |
| | SiO₂ (%) | 66 | 57.5 | 55.5 | 62.8 | 59 | 61.4 | 60.6 | 60.1 |
| | Al₂O₃ (%) | 22.5 | 21.5 | 17.9 | 17.1 | 16.6 | 15 | 17.1 | 17.1 |
| | CaO (%) | 0.25 | 6.7 | 4.7 | 1.5 | 1.5 | 1.5 | 1.5 | 1.5 |
| | MgO (%) | 11 | 12.8 | 14.7 | 15.5 | 19.8 | 19 | 17.7 | 17.7 |
| Com pone nt | K₂O+Na₂O (%) | Trace amount | 0.8 | 0.6 | 0.7 | 0.7 | 0.7 | 0.7 | 0.7 |
| | Fe₂O₃ (%) | Trace amount | 0.3 | 0.3 | 0.2 | 0.2 | 0.2 | 0.2 | 0.2 |
| | B₂O₃ (%) | - | - | - | 0.5 | 0.5 | 0.5 | 0.3 | 1 |
| | Y₂O₃ (%) | - | - | 6.2 | 1.7 | 1.7 | 1.7 | 1.9 | 1.7 |
| Ratio | B₂O₃/Y₂O₃ | - | - | - | 0.29 | 0.29 | 0.29 | 0.16 | 0.59 |
| | MgO/Al₂O₃ | 0.49 | 0.60 | 0.82 | 0.91 | 1.19 | 1.27 | 1.04 | 1.04 |
| | Forming temperature (°C) | 1459 | 1336 | 1301 | 1335 | 1285 | 1308 | 1321 | 1315 |
| Properties | Liquidus temperature (°C) | 1435 | 1292 | 1255 | 1270 | 1276 | 1282 | 1289 | 1275 |
| | Crystallization activation energy (kJ/mol) | 375 | 368 | 388 | 405 | 392 | 408 | 376 | 396 |

| | Crystallization type | Quartz and cordierite | Cordi erite and enstatite | Cordi erite and enstatite | Cordi erite and enstatite | Cordi erite and enstatite | Cordi erite and enstatite | Enstatite | Enstatite |
|---|---|---|---|---|---|---|---|---|---|
| | ΔT (°C) | 24 | 44 | 46 | 65 | 9 | 26 | 32 | 40 |
| | Density (g/cm³) | 2.488 | 2.598 | 2.675 | 2.595 | 2.608 | 2.603 | 2.617 | 2.607 |
| | Elastic modulus (GPa) | 90 | 92.3 | 95.6 | 92.3 | 94.6 | 93.2 | 94.1 | 93 |
| | Specific modulus (*10⁶ m) | 3.69 | 3.63 | 3.65 | 3.63 | 3.70 | 3.65 | 3.67 | 3.64 |

Comparative Embodiments 1-2 show glass fiber components with high elastic modulus of a SiO₂-MgO-Al₂O₃ ternary system well-known in the technical field, and both the two have the characteristics of a high content of aluminum and a low content of magnesium. In Comparative Embodiment 1, the earlier glass fiber components with high elastic modulus have higher glass fiber forming temperature and liquidus temperature, the production difficulty is great, and tank furnace production is difficult to realize. In Comparative Embodiment 2, the current conventional glass fiber components with high elastic modulus have relatively low forming temperature and liquidus temperature and relatively high elastic modulus, but cannot achieve the purpose of the present disclosure and cannot meet higher use requirements.

In Comparative Embodiment 3, the elastic modulus of the glass fiber is increased by increasing the use amount of a rare earth oxide. When the elastic modulus is increased, the density of the glass composition reaches 2.675 g/cm³, which is significantly increased, thus limiting the use of a composite material.

Comparing Comparative Embodiment 4 with Embodiment 1, when the content of MgO is adjusted to be lower than 16.0%, obvious crystallization of cordierite occurs, and the elastic modulus and the specific modulus are significantly reduced.

Comparing Comparative Embodiment 5 with Embodiment 1, when the content of MgO is adjusted to be higher than 19.5%, crystallization of cordierite occurs, and the forming temperature is significantly decreased, resulting in smaller ΔT and a greater risk of crystallization, such that tank furnace production is difficult to meet. With the maturity of a tank furnace drawing process technology for glass fibers, demands for fiber formation can be met when the ΔT is equal to or greater than 35 °C, and the production difficulty is gradually increased with decrease of the ΔT.

Comparing Comparative Embodiment 6 with Embodiment 1, when the MgO/Al₂O₃ ratio is greater than 1.2, crystallization of cordierite occurs, and the elastic modulus is reduced.

Comparing Comparative Embodiment 7 with Embodiment 1, when the B₂O₃/Y₂O₃ ratio is less than 0.2, the liquidus temperature is increased, and the crystallization activation energy is decreased.

Comparing Comparative Embodiment 8 with Embodiment 1, when the B₂O₃/Y₂O₃ ratio is greater than 0.5, the liquidus temperature is increased, the crystallization activation energy is decreased, and the elastic modulus is significantly reduced.

The glass fibers made from the glass fiber compositions in Embodiment 1, Embodiment 2 and Comparative Embodiment 3 are then made into pultruded plates for a fatigue property test, and comparison of S-N curves is shown in Fig. 1. As can be seen from Fig. 1, the pultruded plates in Embodiment 1 and Embodiment 2 have better fatigue data than that in Comparative Embodiment 3, indicating that the glass fiber composite material provided in the technical solution of the present disclosure has superior fatigue properties.

## Claims

1. A high-magnesium glass fiber composition with high specific modulus, comprising the following contents of components in percentage by mass: 58.5-63.0% of SiO₂, 15.0-20.0% of Al₂O₃, 0.3-2.5% of CaO, 16.0-19.5% of MgO, 0.2-0.6% of Fe₂O₃, 1.0-3.5% of Y₂O₃ and B₂O₃, 0.1-1.0% of B₂O₃, and 0.3-0.8% of K₂O and Na₂O.

2. The high-magnesium glass fiber composition with high specific modulus according to claim 1, wherein the content of Y₂O₃ and B₂O₃ in percentage by mass satisfies that a B₂O₃/Y₂O₃ ratio is 0.2-0.5.

3. The high-magnesium glass fiber composition with high specific modulus according to claim 1, wherein the contents of Al₂O₃ and MgO in percentage by mass satisfy that a MgO/Al₂O₃ ratio is 0.8-1.2.

4. The high-magnesium glass fiber composition with high specific modulus according to claim 1, wherein the following contents of components in percentage by mass comprise: 59.0-62.5% of the SiO₂, 16.5-19.0% of the Al₂O₃, 0.5-2.5% of the CaO, 16.0-19.0% of the MgO, 0.2-0.5% of the Fe₂O₃, 1.0-3.0% of the Y₂O₃ and the B₂O₃, 0.2-0.9% of the B₂O₃, and 0.3-0.6% of the K₂O and the Na₂O.

5. The high-magnesium glass fiber composition with high specific modulus according to any one of claims 1-4, wherein the high-magnesium glass fiber composition with high specific modulus has a density of equal to or less than 2.61 g/cm³.

6. A glass fiber made from the high-magnesium glass fiber composition with high specific modulus according to any one of claims 1-5, wherein the glass fiber has a specific modulus of equal to or greater than 3.67*10⁶m.

7. The glass fiber made from the high-magnesium glass fiber composition with high specific modulus according to claim 6, wherein the glass fiber has an elastic modulus of equal to or greater than 94.0 GPa.

8. The glass fiber made from the high-magnesium glass fiber composition with high specific modulus according to claim 6, wherein the glass fiber has a forming temperature of 1,290 °C-1,320 °C.

9. The glass fiber made from the high-magnesium glass fiber composition with high specific modulus according to claim 6, wherein the glass fiber has a liquidus temperature of 1,260 °C-1,280 °C.

10. The high-magnesium glass fiber composition with high specific modulus according to claim 1, wherein the content of Y₂O₃ and B₂O₃ in percentage by mass satisfies that the content of Y₂O₃ and B₂O₃ is 1.0-3.2% and a B₂O₃/Y₂O₃ ratio is 0.2-0.5.

11. The high-magnesium glass fiber composition with high specific modulus according to claim 1, wherein the contents of Al₂O₃ and MgO in percentage by mass satisfy that a MgO/Al₂O₃ ratio is 0.85-1.15.

12. The high-magnesium glass fiber composition with high specific modulus according to claim 1, wherein the high-magnesium glass fiber composition with high specific modulus of the present disclosure is made from the following raw materials: quartz powder, calcined kaolin, quicklime, talc powder, yttrium oxide, magnesium oxide, and calcium boride, the quartz powder has a particle size of 40µm-50 µm, the calcined kaolin has a particle size of 50µm-100 µm, the quicklime has a particle size of 100µm-200 µm, the talc powder has a particle size of 50µm-100 µm, the yttrium oxide has a particle size of 30µm-75 µm, the magnesium oxide has a particle size of 50µm-80 µm, and the calcium boride has a particle size of 40µm-75 µm.

## Patentansprüche

1. Hochmagnesiumhaltige Glasfaserzusammensetzung mit hohem spezifischem Modul, die die folgenden Gehalte an Komponenten in Massenprozent umfasst: 58,5-63,0 % von SiO₂, 15,0-20,0 % von Al₂O₃, 0,3-2,5 % von CaO, 16,0-19,5 % von MgO, 0,2-0,6 % von Fe₂O₃, 1,0-3,5 % von Y₂O₃ und B₂O₃, 0,1-1,0 % von B₂O₃, und 0,3-0,8 % von K₂O und Na₂O.

2. Hochmagnesiumhaltige Glasfaserzusammensetzung mit hohem spezifischem Modul nach Anspruch 1, wobei der Gehalt an Y₂O₃ und B₂O₃ in Masseprozent so bemessen ist, dass das Verhältnis B₂O₃/Y₂O₃ 0,2-0,5 beträgt.

3. Magnesiumreiche Glasfaserzusammensetzung mit hohem spezifischem Modul nach Anspruch 1, wobei die Gehalte an Al₂O₃ und MgO in Masseprozent genügen, dass ein MgO/Al₂O₃-Verhältnis von 0,8-1,2 vorliegt.

4. Hochmagnesiumhaltige Glasfaserzusammensetzung mit hohem spezifischem Modul nach Anspruch 1, wobei die folgenden Gehalte an Komponenten in Masseprozent umfassen: 59,0-62,5 % von SiO₂, 16,5-19,0 % von Al₂O₃, 0,5-2,5 % von CaO, 16,0-19,0 % von MgO, 0,2-0,5 % von Fe₂O₃, 1,0-3,0 % von Y₂O₃ und B₂O₃, 0,2-0,9 % von B₂O₃, und 0,3-0,6 % von K₂O und Na₂O.

5. Hochmagnesiumhaltige Glasfaserzusammensetzung mit hohem spezifischem Modul nach einem der Ansprüche 1 bis 4, wobei die hochmagnesiumhaltige Glasfaserzusammensetzung mit hohem spezifischem Modul eine Dichte von gleich oder weniger als 2,61 g/cm³ aufweist.

6. Glasfaser aus der hochmagnesiumhaltigen Glasfaserzusammensetzung mit hohem spezifischem Modul nach einem der Ansprüche 1 bis 5, wobei die Glasfaser einen spezifischen Modul von gleich oder größer als 3,67*10⁶ m aufweist.

7. Glasfaser aus der hochmagnesiumhaltigen Glasfaserzusammensetzung mit hohem spezifischem Modul nach Anspruch 6, wobei die Glasfaser einen Elastizitätsmodul von gleich oder größer als 94,0 GPa aufweist.

8. Glasfaser aus der hochmagnesiumhaltigen Glasfaserzusammensetzung mit hohem spezifischen Modul nach Anspruch 6, wobei die Glasfaser eine Bildungstemperatur von 1.290-1.320 °C aufweist.

9. Glasfaser aus der hochmagnesiumhaltigen Glasfaserzusammensetzung mit hohem spezifischen Modul nach Anspruch 6, wobei die Glasfaser eine Liquidustemperatur von 1.260-1.280 °C aufweist.

10. Hochmagnesiumhaltige Glasfaserzusammensetzung mit hohem spezifischem Modul nach Anspruch 1, wobei der Gehalt an Y₂O₃ und B₂O₃ in Masseprozent ausreicht, dass der Gehalt an Y₂O₃ und B₂O₃ 1,0-3,2 % beträgt und ein B₂O₃/Y₂O₃-Verhältnis von 0,2-0,5 vorliegt.

11. Hochmagnesiumhaltige Glasfaserzusammensetzung mit hohem spezifischem Modul nach Anspruch 1, wobei die Gehalte an Al₂O₃ und MgO in Masseprozent genügen, dass ein MgO/Al₂O₃-Verhältnis von 0,85-1,15 vorliegt.

12. Hochmagnesiumhaltige Glasfaserzusammensetzung mit hohem spezifischem Modul nach Anspruch 1, wobei die hochmagnesiumhaltige Glasfaserzusammensetzung mit hohem spezifischem Modul nach der vorliegenden Offenbarung aus den folgenden Rohmaterialien hergestellt ist: Quarzpulver, kalziniertem Kaolin, Branntkalk, Talkpulver, Yttriumoxid, Magnesiumoxid und Calciumborid, wobei das Quarzpulver eine Partikelgröße von 40-50 µm aufweist, das kalzinierte Kaolin eine Partikelgröße von 50-100 µm aufweist, der Branntkalk eine Partikelgröße von 100-200 µm aufweist, das Talkpulver eine Partikelgröße von 50-100 µm aufweist, das Yttriumoxid eine Partikelgröße von 30-75 µm aufweist, das Magnesiumoxid eine Partikelgröße von 50-80 µm aufweist und das Calciumborid eine Partikelgröße von 40-75 µm aufweist.

## Revendications

1. Composition de fibre de verre à haute teneur en magnésium avec un module spécifique élevé, comprenant les teneurs suivantes en composants en pourcentage en masse : 58,5-63,0 % de SiO₂, 15,0-20,0 % d'Al₂O₃, 0,3-2,5 % de CaO, 16,0-19,5 % de MgO, 0,2-0,6 % de Fe₂O₃, 1,0-3,5 % de Y₂O₃ et B₂O₃, 0,1-1,0 % de B₂O₃, et 0,3-0,8 % de K₂O et Na₂O.

2. Composition de fibre de verre à haute teneur en magnésium avec un module spécifique élevé selon la revendication 1, dans laquelle la teneur en Y₂O₃ et B₂O₃ en pourcentage en masse satisfait à ce qu'un rapport B₂O₃/Y₂O₃ va de 0,2 à 0,5.

3. Composition de fibre de verre à haute teneur en magnésium avec un module spécifique élevé selon la revendication 1, dans laquelle les teneurs en Al₂O₃ et MgO en pourcentage en masse satisfont à ce qu'un rapport MgO/Al₂O₃ va de 0,8 à 1,2.

4. Composition de fibre de verre à haute teneur en magnésium avec un module spécifique élevé selon la revendication 1, dans laquelle les teneurs suivantes en composants en pourcentage en masse comprennent : 59,0-62,5 % du SiO₂, 16,5-19,0 % de l'Al₂O₃, 0,5-2,5 % du CaO, 16,0-19,0 % du MgO, 0,2-0,5 % du Fe₂O₃, 1,0-3,0 % du Y₂O₃ et du B₂O₃, 0,2-0,9 % du B₂O₃, et 0,3-0,6 % du K₂O et du Na₂O.

5. Composition de fibre de verre à haute teneur en magnésium avec un module spécifique élevé selon l'une quelconque des revendications 1 à 4, dans laquelle la composition de fibre de verre à haute teneur en magnésium avec module spécifique élevé a une masse volumique égale ou inférieure à 2,61 g/cm³.

6. Fibre de verre fabriquée à partir de la composition de fibre de verre à haute teneur en magnésium avec un module spécifique élevé selon l'une quelconque des revendications 1 à 5, dans laquelle la fibre de verre a un module spécifique égal ou supérieur à 3,67*10⁶ m.

7. Fibre de verre fabriquée à partir de la composition de fibre de verre à haute teneur en magnésium avec un module spécifique élevé selon la revendication 6, dans laquelle la fibre de verre a un module élastique égal ou supérieur à 94,0 GPa.

8. Fibre de verre fabriquée à partir de la composition de fibre de verre à haute teneur en magnésium avec un module spécifique élevé selon la revendication 6, dans laquelle la fibre de verre a une température de formage de 1 290 °C à 1 320 °C.

9. Fibre de verre fabriquée à partir de la composition de fibre de verre à haute teneur en magnésium avec un module spécifique élevé selon la revendication 6, dans laquelle la fibre de verre a une température du liquidus de 1 260 °C à 1 280 °C.

10. Composition de fibre de verre à haute teneur en magnésium avec un module spécifique élevé selon la revendication 1, dans laquelle la teneur en Y₂O₃ et B₂O₃ en pourcentage en masse satisfait à ce que la teneur en Y₂O₃ et en B₂O₃ va de 1,0 à 3,2 % et un rapport B₂O₃/Y₂O₃ va de 0,2 à 0,5.

11. Composition de fibre de verre à haute teneur en magnésium avec un module spécifique élevé selon la revendication 1, dans laquelle les teneurs en Al₂O₃ et en MgO en pourcentage en masse satisfont à ce qu'un rapport MgO/Al₂O₃ va de 0,85 à 1,15.

12. Composition de fibre de verre à haute teneur en magnésium avec un module spécifique élevé selon la revendication 1, dans laquelle la composition de fibre de verre à haute teneur en magnésium avec un module spécifique élevé de la présente description est fabriquée à partir des matières premières suivantes : poudre de quartz, kaolin calciné, chaux vive, poudre de talc, oxyde d'yttrium, oxyde de magnésium et borure de calcium, la poudre de quartz a une taille de particules de 40 µm à 50 µm, le kaolin calciné a une taille de particules de 50 µm à 100 µm, la chaux vive a une taille de particules de 100 µm à 200 µm, la poudre de talc a une taille de particules de 50 µm à 100 µm, l'oxyde d'yttrium a une taille de particules de 30 µm à 75 µm, l'oxyde de magnésium a une taille de particules de 50 µm à 80 µm et le borure de calcium a une taille de particules de 40 µm à 75 µm.
